# EUROPEAN PATENT APPLICATION

(11) **EP 4 502 787 A1**
(43) Date of publication of application: **05.02.2025**
(21) Application number: 23780122.0
(22) Date of filing: 24.03.2023
(51) Int. Cl.: G06F 8/65, B60R 16/02, E02F 9/26

(54) **EXCAVATOR**

(30) Priority: 31.03.2022 JP 2022060815
(71) Applicant: Sumitomo Construction Machinery Co., Ltd., Tokyo 141-6025 (JP)
(72) Inventor: SHINKAI, Kazuma, Chiba-shi, Chiba 263-0001 (JP)
(74) Representative: Louis Pöhlau Lohrentz
(86) International application number: PCT/JP2023/011723
(87) International publication number: WO 2023/190112

(57) **Abstract**

An excavator includes an upper turning body; a lower traveling body; and a control device including a memory in which a program is stored, wherein rewriting of the program is permitted when a predetermined condition is satisfied.

## Description

### TECHNICAL FIELD

The present invention relates to an excavator.

### BACKGROUND ART

In recent years, there has been known a technology for updating software by remotely rewriting a program of a controller mounted on a construction machine.

### CITATION LIST

### PATENT DOCUMENT

Patent Document 1: Japanese Unexamined Patent Application Publication No. 2018-18307

### SUMMARY OF INVENTION

### TECHNICAL PROBLEM

According to the conventional technique described above, there is a possibility that problems occur, such as writing an erroneous program to a construction machine or writing a program to a construction machine that does not require a software update.

In view of the above problem, it is an object of the present invention to appropriately rewrite a program.

### SOLUTION TO PROBLEM

An excavator according to an embodiment of the present invention includes an upper turning body; a lower traveling body; and a control device including a memory in which a program is stored, wherein rewriting of the program is permitted when a predetermined condition is satisfied.

### ADVANTAGEOUS EFFECTS OF INVENTION

Rewriting of the program can be properly performed.

### BRIEF DESCRIPTION OF DRAWINGS

[FIG. 1] FIG. 1 is a diagram illustrating an example of a system configuration of an excavator management system.
[FIG. 2] FIG. 2 is a diagram explaining a hardware configuration of each apparatus of an excavator management system.
[FIG. 3] FIG. 3 is a diagram explaining a function of each apparatus of an excavator management system.
[FIG. 4] FIG. 4 illustrates an example of management information.
[FIG. 5] FIG. 5 is a sequence diagram illustrating the operation of the excavator management system.
[FIG. 6] FIG. 6 is a flow chart illustrating excavator processing.
[FIG. 7A] FIG. 7A is a first diagram illustrating a screen transition of a display device of an excavator.
[FIG. 7B] FIG. 7B is a second diagram illustrating a screen transition of a display device of an excavator.
[FIG. 7C] FIG. 7C is a third diagram illustrating a screen transition of a display device of an excavator.
[FIG. 8A] FIG. 8A is a fourth diagram illustrating a screen transition of a display device of an excavator.
[FIG. 8B] FIG. 8B is a fifth diagram illustrating a screen transition of a display device of an excavator.

### DESCRIPTION OF EMBODIMENTS

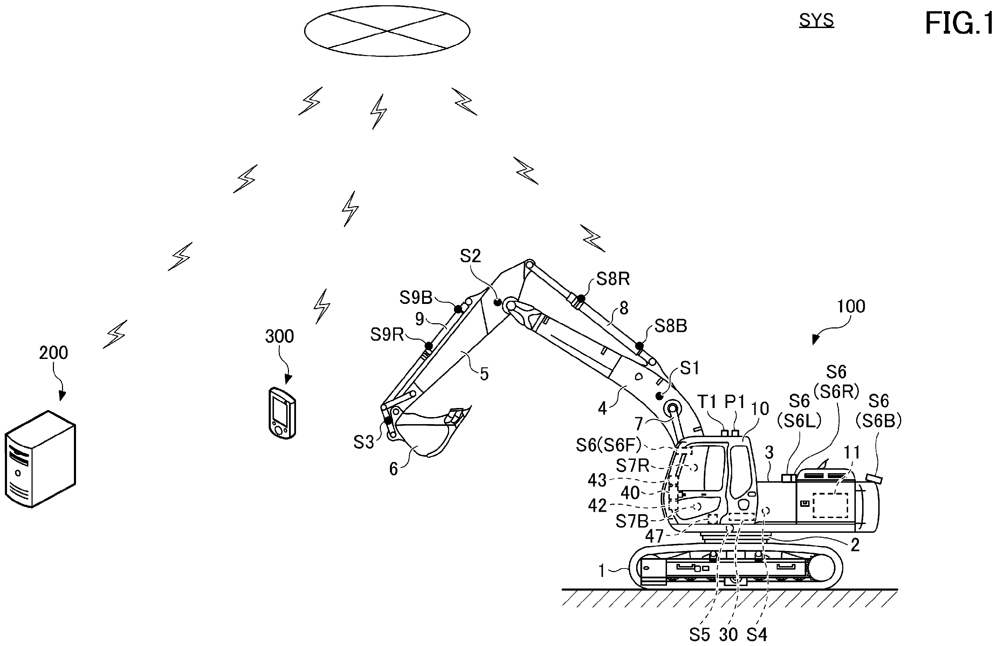

A management system of an excavator of the present embodiment will be described below with reference to the drawings. FIG. 1 is a diagram illustrating an example of the system configuration of the management system of an excavator. In the present embodiment, an excavator 100 will be described as an example of a construction machine.

A management system SYS of an excavator of the present embodiment includes the excavator 100, a management apparatus 200, and a support apparatus 300. In the following description, the management system SYS of the construction machine will be simply referred to as the management system SYS.

In the management system SYS of the present embodiment, the excavator 100, the management apparatus 200, and the support apparatus 300 are connected via a network or the like.

The excavator 100 of the present embodiment is provided with a controller 30 (control apparatus) in which a program (software) is stored, and various functions are implemented by the control of the controller 30.

Specifically, the excavator 100 acquires operation information indicating the operation status of the excavator, transmits the operation information to the management apparatus 200, and receives various kinds of information from the management apparatus 200.

Specifically, the operation information of the excavator 100 includes position information indicating the current position of the excavator, orientation information indicating the orientation of the excavator, posture information indicating the posture of the excavator, work content information indicating the work content, load rate information indicating the load rate, cumulative time information indicating the cumulative time of the operation time, fuel information including the fuel injection amount, the CO₂ emission amount, the work amount, and the like.

When the excavator 100 of the present embodiment rewrites the program installed in the controller 30, the excavator 100 transmits the machine number for identifying the excavator 100 and the version information of the newly written program to the management apparatus 200.

The excavator 100 receives the result of the matching processing for determining whether the newly written program is appropriate from the management apparatus 200, and performs processing according to the result. Specifically, the excavator 100 rewrites the program when the newly written program is appropriate.

The excavator 100 of the present embodiment rewrites the program in the key-off state. In the present embodiment, by rewriting the program only in the key-off state, it is possible to prevent the excavator 100 from operating during the program rewriting, thereby ensuring safety.

The management apparatus 200 receives the operation information from the excavator 100, and totalizes the operation information for each work content of the excavator 100 indicated by the state information included in the operation information. The management apparatus 200 identifies a period during which each actuator operation is stopped while the engine is driven (idling period) in the period during which the excavator 100 is in a state in which the work is stopped, and causes a display device 40 of the excavator 100 to display information on the fuel during the identified period.

The period during which the excavator 100 is in a state in which the work is stopped includes a period during which the engine is stopped in addition to a period during which each actuator operation is stopped while the engine is driven (idling period).

As described above, the state in which each actuator operation of the excavator 100 is stopped includes a state in which an engine 11 as the prime motor of the excavator 100 is turned on and no lever operation is performed, and a state in which the engine 11 is turned off.

Note that an electric motor may be used as the prime motor without using an engine. In this case, an electric storage device is also mounted to supply electric power to the electric motor. The electric storage device is a device for storing electric power, and is, for example, an electric double-layer capacitor, a lithium-ion battery, a nickel-metal hydride battery, or the like. In this case, the excavator 100 controls the electric motor by using an inverter, so that the main pump 14 is driven to rotate by the electric power stored in the electric storage device.

Upon receiving information including the machine number of the excavator 100 and the version information of the program to be newly written in from the excavator 100, the management apparatus 200 of the present embodiment performs matching processing for determining whether the newly written program is appropriate. The management apparatus 200 then transmits the result of the matching processing to the excavator 100.

The support apparatus 300 is a terminal apparatus mainly used by a worker who operates the excavator 100. In the present embodiment, for example, the program for writing may be downloaded in advance from the management apparatus 200 to the support apparatus 300.

The support apparatus 300 stores the program downloaded by the worker's operation in a USB (Universal Serial Bus) memory or the like as a program to be newly written in. When the worker sets the USB memory, the excavator 100 reads the program stored in the USB memory.

In the present embodiment, the program to be newly written in is stored in the USB memory, but the present embodiment is not limited to this. The program to be newly written in may be stored in any storage medium as long as the storage medium is a portable external storage medium from which information can be read in the excavator 100.

In the present embodiment, the program to be newly written in is downloaded from the management apparatus 200 to the support apparatus 300, and written from the support apparatus 300 to the USB memory (external storage medium), but the present embodiment is not limited to this. The program to be newly written in may be written directly from the management apparatus 200 to the USB memory, for example.

In the example of FIG. 1, the management apparatus 200 is implemented by one information processing apparatus, but the present embodiment is not limited thereto. The management apparatus 200 may be implemented by a plurality of information processing apparatuses. That is, the functions implemented by the management apparatus 200 may be implemented by a plurality of information processing apparatuses.

Next, the configuration of the excavator 100 according to the present embodiment will be described. FIG. 1 illustrates a side view of the excavator 100.

The excavator 100 has a lower traveling body 1, a turning mechanism 2, and an upper turning body 3. In the excavator 100, the upper turning body 3 is rotatably mounted on the lower traveling body 1 via the turning mechanism 2. A boom 4 is attached to the upper turning body 3. An arm 5 is attached to the tip of the boom 4, and a bucket 6 as an end attachment is attached to the tip of the arm 5.

The boom 4, the arm 5, and the bucket 6 constitute an excavation attachment as an example of an attachment. The boom 4 is driven by a boom cylinder 7, the arm 5 is driven by an arm cylinder 8, and the bucket 6 is driven by a bucket cylinder 9. A boom angle sensor S1 is attached to the boom 4, an arm angle sensor S2 is attached to the arm 5, and a bucket angle sensor S3 is attached to the bucket 6.

The boom angle sensor S1 is configured to detect the rotation angle of the boom 4. In the present embodiment, the boom angle sensor S1 is an acceleration sensor, and can detect the rotation angle (hereinafter, referred to as a "boom angle") of the boom 4 with respect to the upper turning body 3. The boom angle, for example, becomes a minimum angle when the boom 4 is lowered to the maximum, and becomes larger as the boom 4 is raised.

The arm angle sensor S2 is configured to detect the angle of rotation of the arm 5. In the present embodiment, the arm angle sensor S2 is an acceleration sensor and can detect the angle of rotation (hereinafter, referred to as an "arm angle") of the arm 5 with respect to the boom 4. The arm angle has a minimum angle when the arm 5 is fully closed, for example, and increases as the arm 5 is opened.

The bucket angle sensor S3 is configured to detect the angle of rotation of the bucket 6. In the present embodiment, the bucket angle sensor S3 is an acceleration sensor and can detect the angle of rotation (hereinafter, referred to as a "bucket angle") of the bucket 6 with respect to the arm 5. The bucket angle has a minimum angle when the bucket 6 is fully closed, for example, and increases as the bucket 6 is opened.

The boom angle sensor S1, the arm angle sensor S2, and the bucket angle sensor S3 may each be a potentiometer using a variable resistor, a stroke sensor for detecting the stroke of the corresponding hydraulic cylinder, a rotary encoder for detecting the angle of rotation around the connecting pin, a gyro sensor, or a combination of an acceleration sensor and a gyro sensor.

A boom rod pressure sensor S7R and a boom bottom pressure sensor S7B are attached to the boom cylinder 7. An arm rod pressure sensor S8R and an arm bottom pressure sensor S8B are attached to the arm cylinder 8.

A bucket rod pressure sensor S9R and a bucket bottom pressure sensor S9B are attached to the bucket cylinder 9. The boom rod pressure sensor S7R, the boom bottom pressure sensor S7B, the arm rod pressure sensor S8R, the arm bottom pressure sensor S8B, the bucket rod pressure sensor S9R, and the bucket bottom pressure sensor S9B are also collectively referred to as "cylinder pressure sensors".

The boom rod pressure sensor S7R detects the pressure (hereinafter, referred to as "boom rod pressure") in the rod-side oil chamber of the boom cylinder 7, and the boom bottom pressure sensor S7B detects the pressure (hereinafter, referred to as "boom bottom pressure") in the bottom-side oil chamber of the boom cylinder 7. The arm rod pressure sensor S8R detects the pressure (hereinafter, referred to as "arm rod pressure") in the rod-side oil chamber of the arm cylinder **8,** and the arm bottom pressure sensor S8B detects the pressure (hereinafter, referred to as "arm bottom pressure") in the bottom-side oil chamber of the arm cylinder 8.

The bucket rod pressure sensor S9R detects the pressure (hereinafter, referred to as "bucket rod pressure") in the rod-side oil chamber of the bucket cylinder 9, and the bucket bottom pressure sensor S9B detects the pressure (hereinafter, referred to as "bucket bottom pressure") in the bottom-side oil chamber of the bucket cylinder 9.

The upper turning body 3 is provided with a cabin 10 serving as a driver compartment and a power source, such as an engine 11. A sensor for detecting the amount of CO₂ emissions may be provided in the vicinity of the exhaust mechanism of the engine 11.

Further, the upper turning body 3 is provided with a controller 30, a display device 40, an input device 42, an audio output device 43, a storage device 47, a positioning device P1, a machine inclination sensor S4, a turning angular speed sensor S5, an imaging device S6, and a communication device T1.

The upper turning body 3 may be provided with a power storage part for supplying power, a motor-generator for generating power using the rotational driving force of the engine 11, and the like. The power storage part may be, for example, a capacitor, a lithium-ion battery, or the like. The motor-generator may function as a motor to drive a mechanical load, or may function as a generator to supply power to the electric load.

The controller 30 functions as a main control part for controlling the drive of the excavator 100. In the present embodiment, the controller 30 is configured by a computer including a CPU (Central Processing Unit), RAM (Random Access Memory), ROM (Read Only Memory), and the like. The various functions of the controller 30 are implemented, for example, by the CPU executing a program stored in the ROM. The various functions may include, for example, at least one of a machine guidance function for guiding the manual operation of the excavator 100 by the operator or a machine control function for automatically supporting the manual operation of the excavator 100 by the operator.

The display device 40 is configured to display various kinds of information. The display device 40 may be connected to the controller 30 via a communication network, such as a CAN (Controller Area Network), or may be connected to the controller 30 via an exclusive-use line.

The input device 42 is configured to allow the operator to input various kinds of information to the controller 30. The input device 42 includes at least one of a touch panel, a knob switch, a membrane switch, or the like installed in the cabin 10.

The audio output device 43 is configured to output audio. The audio output device 43 may be, for example, an on-vehicle speaker connected to the controller 30 or an alarm, such as a buzzer. In the present embodiment, the audio output device 43 is configured to output various kinds of information in audio in response to an audio output instruction from the controller 30.

The storage device 47 is configured to store various kinds of information. The storage device 47 is, for example, a nonvolatile storage medium, such as a semiconductor memory. The storage device 47 may store information output by various kinds of devices during the operation of the excavator 100, or may store information acquired via various kinds of devices before the operation of the excavator 100 is started.

The storage device 47 may store, for example, data regarding the target work surface acquired via the communication device T1 or the like. The target work surface may be set by the operator of the excavator 100 or may be set by a construction manager or the like.

The positioning device P1 may be configured to measure the position of the upper turning body 3. The positioning device P1 may be configured to measure the orientation of the upper turning body 3. In the present embodiment, the positioning device P1 is a GNSS compass, for example, and detects the position and orientation of the upper turning body 3, and outputs the detected value to the controller 30. Therefore, the positioning device P1 may also function as an orientation detection device for detecting the orientation of the upper turning body 3. The orientation detection device may be an orientation sensor attached to the upper turning body 3.

The machine inclination sensor S4 is configured to detect the inclination of the upper turning body 3. In the present embodiment, the machine inclination sensor S4 is an acceleration sensor for detecting the longitudinal inclination angle around the longitudinal axis and the lateral inclination angle around the lateral axis of the upper turning body 3 with respect to the virtual horizontal plane. The longitudinal axis and the lateral axis of the upper turning body 3 are orthogonal to each other at an excavator center point which is a point on the pivot axis of the excavator 100, for example.

The turning angular speed sensor S5 is configured to detect the turning angular speed of the upper turning body 3. The turning angular speed sensor S5 may be configured to detect or calculate the turning angle of the upper turning body 3. In the present embodiment, the turning angular speed sensor S5 is a gyro sensor. The turning angular speed sensor S5 may be a resolver, a rotary encoder, or the like.

The imaging device S6 is an example of a space recognition apparatus, and is configured to acquire an image around the excavator 100. In the present embodiment, the imaging device S6 includes a front camera S6F for imaging the space in front of the excavator 100, a left camera S6L for imaging the space to the left of the excavator 100, a right camera S6R for imaging the space to the right of the excavator 100, and a rear camera S6B for imaging the space behind the excavator 100.

The imaging device S6 is, for example, a monocular camera having an imaging device, such as a CCD or CMOS, and outputs a captured image to the display device 40. The imaging device S6 may be a stereo camera, a range image camera, or the like. The imaging device S6 may be replaced with another spatial recognition device, such as a three-dimensional range image sensor, an ultrasonic sensor, a millimeter-wave radar, a LIDAR, or an infrared sensor, or a combination of another spatial recognition device and a camera.

The front camera S6F is, for example, mounted on the ceiling of the cabin 10, that is, inside the cabin 10. However, the front camera S6F may be mounted outside the cabin 10, such as on the roof of the cabin 10 or on the side of the boom 4. The left camera S6L is mounted on the left end of the upper surface of the upper turning body 3, the right camera S6R is mounted on the right end of the upper surface of the upper turning body 3, and the rear camera S6B is mounted on the rear end of the upper surface of the upper turning body 3.

The communication device T1 is configured to control communication with external devices located outside the excavator 100. In the present embodiment, the communication device T1 controls communication with external devices via a satellite communication network, a cellular phone communication network, an Internet network, or the like. The external devices are, for example, a management apparatus 200, such as a server installed in an external facility, and a support apparatus 300, such as a smartphone carried by workers around the excavator 100.

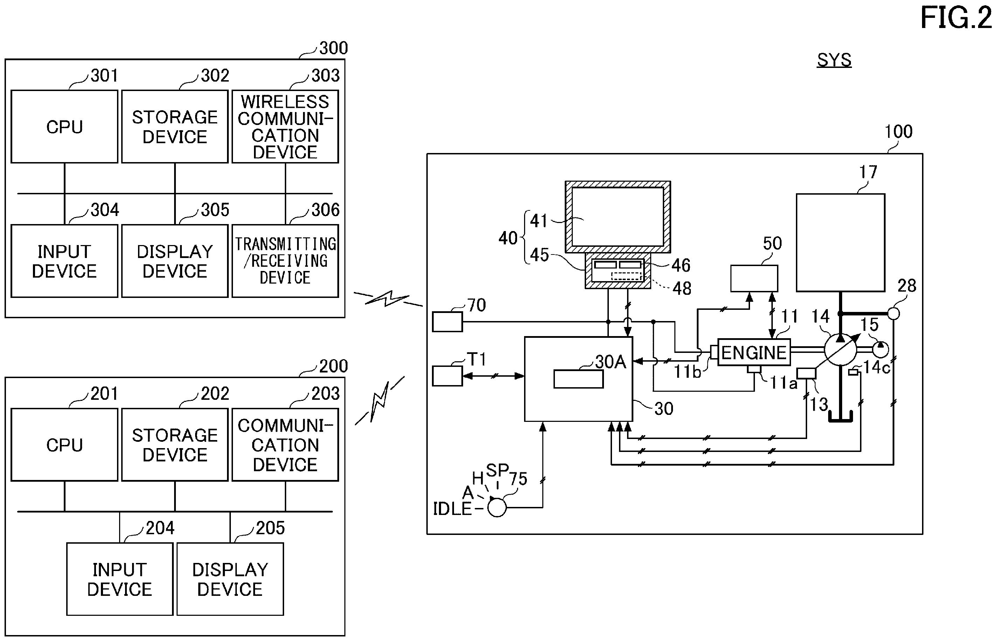

Next, referring to FIG. 2, the hardware configuration of each apparatus of the management system SYS will be described. FIG. 2 is a diagram for explaining the hardware configuration of each apparatus of the excavator management system.

First, the hardware configuration of the excavator 100 will be described. The controller 30, the display device 40, the communication device T1, and the like are installed in the cabin 10.

The engine 11 is a diesel engine employing isochronous control for maintaining an engine rotation speed constant regardless of an increase or decrease in an engine load. The fuel injection amount, the fuel injection timing, and the like related to the engine 11 are controlled by an engine control part 50.

The rotary shaft of the engine 11 is connected to the rotary shafts of a main pump 14 and a pilot pump 15 as hydraulic pumps, respectively.

A regulator 13 is configured to control the displacement volume of the main pump 14. In the present embodiment, the regulator 13 controls the displacement volume of the main pump 14 by adjusting the swash plate tilt angle of the main pump 14 according to a control instruction from the controller 30. For example, the controller 30 changes the displacement volume of the main pump 14 by outputting a control instruction to the regulator 13 according to an output of a discharge pressure sensor 28 or the like. The regulator 13 is configured to transmit data representing the swash plate tilt angle to the controller 30.

The main pump 14 is configured to supply hydraulic oil to a control valve 17 via a hydraulic oil line. In the present embodiment, the main pump 14 is a swash plate type variable displacement hydraulic pump.

An oil temperature sensor 14c is configured to detect the temperature of the hydraulic oil flowing in the hydraulic oil line between the hydraulic oil tank and the main pump 14. The oil temperature sensor 14c is configured to transmit the detected data to the controller 30.

The pilot pump 15 is configured to supply hydraulic oil to various hydraulic control devices, such as an operation device, through a pilot line. In the present embodiment, the pilot pump 15 is a fixed displacement hydraulic pump. However, the pilot pump 15 may be omitted. In this case, the function performed by the pilot pump 15 may be implemented by the main pump 14. In this case, the main pump 14 may have a function of supplying hydraulic oil to an operation device or the like after reducing the pressure of the hydraulic oil by a throttle or the like, other than the function of supplying the hydraulic oil to the control valve 17.

The control valve 17 is a hydraulic control device for controlling the hydraulic system of the excavator 100. The control valve 17 is connected to hydraulic actuators, such as a hydraulic motor for right-side travel, a hydraulic motor for left-side travel, a boom cylinder 7, an arm cylinder 8, a bucket cylinder 9, and a hydraulic motor for turning.

The controller 30 is a control device for controlling the excavator 100. In the present embodiment, the controller 30 is composed of a microcomputer including a CPU, a volatile memory device, a nonvolatile memory device, and the like. Various functions of the controller 30 are implemented by the CPU executing a program stored in the nonvolatile memory device.

The controller 30 has a memory 30A. The memory 30A is, for example, a ROM, and the like, and the memory 30A stores, for example, a program for outputting an instruction to the engine control part 50 described later.

In the present embodiment, storing a new program read from a USB memory in the memory 30A is expressed as rewriting a program.

In the present embodiment, a new program read from a USB memory may be expressed as a program for writing. Further, in the present embodiment, a program stored in the memory 30A may be expressed as a program to be rewritten. A program to be rewritten is a program to be rewritten into a program for writing read from a USB memory.

The display device 40 is mounted between the right pillar and the driver's seat, and is arranged so that an operator seated in the driver's seat can see the screen. The display device 40 can display various kinds of information in response to instructions from the controller 30. In the present embodiment, the display device 40 is a liquid crystal display connected to the controller 30.

The display device 40 may be connected to the controller 30 via a communication network, such as CAN, or may be connected to the controller 30 via an exclusive-use line. The display device 40 has an image display part 41, a switch panel 45 as an input part, and a USB memory insertion port 46. The display device 40 also has a processing device 48 for controlling the operation of the display device 40.

The image display part 41 displays an image. The switch panel 45 is a panel including various hardware switches. The switch panel 45 may be a touch panel arranged on the image display part 41. A USB memory is inserted into the insertion port 46.

When a USB memory is inserted into the insertion port 46, the processing device 48 detects this and reads a program from the USB memory. Then, the processing device 48 transmits the read program to the controller 30. The processing device 48 controls the display of the image display part 41 in response to a notification or the like transmitted from the management apparatus 200.

In the present embodiment, the display device 40 is configured to operate by receiving power supplied from a storage battery 70. The storage battery 70 is charged by power generated by an alternator 11a (generator) of the engine 11. The power of the storage battery 70 is also supplied to the controller 30, the communication device T1, and the like. For example, a starter 11b of the engine 11 is configured to be driven by power from the storage battery 70 to start the engine 11.

The communication device T1 is configured to control communication between the excavator 100 and external devices. In the present embodiment, the communication device T1 controls wireless communication between the excavator 100 and at least one of the support apparatus 300 or the management apparatus 200 through at least one of a satellite communication line, a mobile phone communication line, a short-range wireless communication line, or the like.

The engine control part 50 is configured to control the engine 11. The engine control part 50 is configured to transmit data indicating the state of the engine 11, such as cooling water temperature, to the controller 30.

An engine rotation speed adjustment dial 75 is a dial for adjusting the rotation speed of the engine 11. The engine rotation speed adjustment dial 75 transmits data indicating the setting state of the engine rotation speed to the controller 30. The engine rotation speed adjustment dial 75 is configured to switch the engine rotation speed in four levels, namely, an SP mode, an H mode, an A mode, and an idling mode. The SP mode is a rotation speed mode selected when priority is given to the amount of work, and utilizes the highest engine rotation speed. The H mode is a rotation speed mode selected when both the amount of work and the gas mileage are desired, and utilizes the second highest engine rotation speed. The A mode is a rotation speed mode selected when it is desired to operate the excavator 100 with low noise while prioritizing the gas mileage, and utilizes the third highest engine rotation speed. The idling mode is a rotation speed mode selected when the engine 11 is desired to be in an idling state, and the lowest engine rotation speed is utilized. The engine 11 is controlled to rotate at a constant engine rotation speed corresponding to the rotation speed mode set by the engine rotation speed adjustment dial 75.

Next, the hardware configuration of the management apparatus 200 of the present embodiment will be described. The management apparatus 200 of the present embodiment is a computer having a CPU 201, a storage device 202, a communication device 203, an input device 204, and a display device 205, which are connected to each other by buses.

The CPU 201 controls the entire operation of the management apparatus 200. The storage device 202 stores a program to be executed by the CPU 201, various kinds of information related to the excavator 100, and the like. The communication device 203 communicates with the excavator 100 and the support apparatus 300 via a network.

The input device 204 is for inputting information to the management apparatus 200, and is implemented by, for example, a keyboard or a pointing device. The display device 205 displays various kinds of information output from the management apparatus 200, and is implemented by a display or the like.

Next, the hardware configuration of the support apparatus 300 of the present embodiment will be described. The support apparatus 300 of the present embodiment is a computer having a CPU 301, a storage device 302, a wireless communication device 303, an input device 304, a display device 305, and a transmitting/receiving device 306, which are connected to each other by buses.

The CPU 301 controls the entire operation of the support apparatus 300. The storage device 302 stores various kinds of information, such as programs executed by the CPU 301, and programs downloaded from the management apparatus 200. The wireless communication device 303 is a communication device for performing short-range wireless communication with the excavator 100.

The input device 304 is for inputting information to the support apparatus 300, and is implemented by, for example, a touch panel or the like. The display device 305 is for displaying various kinds of information output from the support apparatus 300, and is implemented by a display or the like. The transmitting/receiving device 306 transmits and receives data via a network between the support apparatus 300, the management apparatus 200, and the excavator 100.

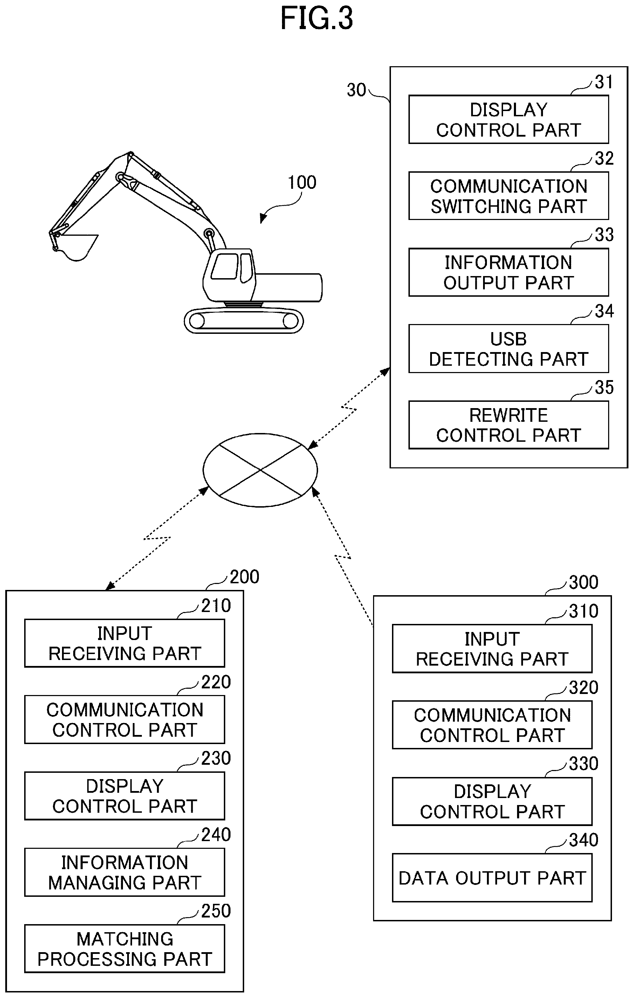

Next, the functions of the apparatuses included in the management system SYS of the present embodiment will be described with reference to FIG. 3. FIG. 3 is a diagram for explaining the functions of the apparatuses included in the excavator management system.

First, the functions of the excavator 100 will be described. The following parts are implemented by the processing device 48 included in the display device 40 of the excavator 100. The excavator 100 of the present embodiment includes a display control part 31, a communication switching part 32, an information output part 33, a USB detecting part 34, and a rewrite control part 35.

The display control part 31 controls the display of the display device 40. Specifically, the display control part 31 causes the display device 40 to display, for example, a guide screen for rewriting a program to be rewritten into a program for writing.

The communication switching part 32 switches the communication method between the display device 40 and the controller 30. Specifically, the communication switching part 32 switches the communication standard used for communication between the controller 30 and the display device 40 from the communication standard for transmitting and receiving signals to CAN.

The information output part 33 outputs various kinds of information and the like from the excavator 100 to the management apparatus 200. Specifically, the information output part 33 acquires the machine number of the excavator 100 and the version information of the program for writing, and outputs the acquired information to the management apparatus 200.

The USB detecting part 34 detects that the USB memory is inserted into the insertion port 46 of the display device 40.

The rewrite control part 35 rewrites the program to be rewritten stored in the memory 30A of the controller 30 into a program for writing in accordance with the result of a matching processing in the management apparatus 200.

In the rewrite control part 35 of the present embodiment, rewriting of the program is permitted only when the result of the matching processing by the management apparatus 200 is matched. That is, the rewrite control part 35 rewrites the program when a predetermined condition is satisfied.

The predetermined condition means that the version information of the program for writing, the machine number identifying the excavator 100, and the management information managed in the management apparatus 200 are matched. Details of the management information will be described later.

Further, the predetermined conditions include safety conditions of the excavator 100. The safety conditions include, for example, ensuring that the machine does not move. The assurance that the machine does not move includes, for example, a state in which the key is off, a state in which the gate lock lever is locked, a state in which the engine is off, and the like.

In the following description, a state in which the excavator 100 does not satisfy the predetermined condition may be expressed as a state in which program rewriting is guarded (prohibited).

Next, the functions of the management apparatus 200 will be described. The management apparatus 200 of the present embodiment includes an input receiving part 210, a communication control part 220, a display control part 230, an information managing part 240, and a matching processing part 250.

The input receiving part 210 of the present embodiment receives input of various types of information to the management apparatus 200. More specifically, the input receiving part 210 receives the input of the machine number for identifying the machine of the excavator 100 and the version information of the program to be rewritten from the excavator 100.

The communication control part 220 controls the communication between the management apparatus 200, the excavator 100, and the support apparatus 300. More specifically, the communication control part 220 causes the support apparatus 300 to download the program for writing. The communication control part 220 also transmits the result of the matching processing by the matching processing part 250 to the excavator 100.

The display control part 230 controls the display on the display device 205.

The information managing part 240 manages management information referred to when the matching processing part 250 performs the matching processing. The management information is, for example, information that associates the machine number of the excavator 100 with the version information of a program to be stored in the excavator 100. The details of the management information will be described later.

The matching processing part 250 refers to the management information and performs matching processing to determine whether there is information that matches the combination of the machine number of the excavator 100 and the version information received by the input receiving part 210. The result of the matching processing is transmitted to the excavator 100 by the communication control part 220.

Next, the functions of the support apparatus 300 will be described. The support apparatus 300 of the present embodiment includes an input receiving part 310, a communication control part 320, a display control part 330, and a data output part 340.

The input receiving part 310 receives various inputs to the support apparatus 300. Specifically, for example, the input receiving part 310 receives an operation for writing a program downloaded to the support apparatus 300 to a USB memory.

The communication control part 320 controls communication between the support apparatus 300, the excavator 100 and the management apparatus 200.

The display control part 330 controls display of the display device 305. More specifically, the display control part 330 may cause the display device 305 to display a guide screen for downloading a program for writing, a guide screen for writing a downloaded program into a USB memory, or the like.

The data output part 340 outputs the program for writing to the USB memory.

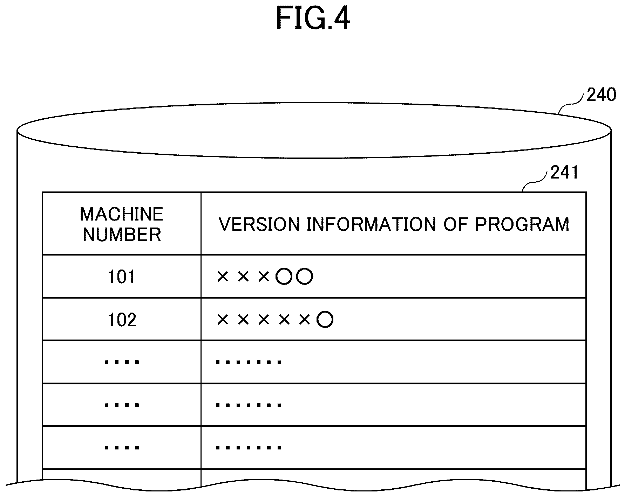

Next, the management information of the present embodiment will be described with reference to FIG. 4. FIG. 4 is a diagram illustrating an example of the management information.

The management information 241 of the present embodiment includes, as items of information, a machine number and version information, which are associated with each other.

The value of the item "machine number" indicates the machine number for identifying the excavator 100. The value of the item "version information" indicates the version information of the program to be written in the excavator 100 identified by the machine number.

The management information 241 of the present embodiment may be stored in the management apparatus 200 in advance by, for example, an administrator of the management system SYS.

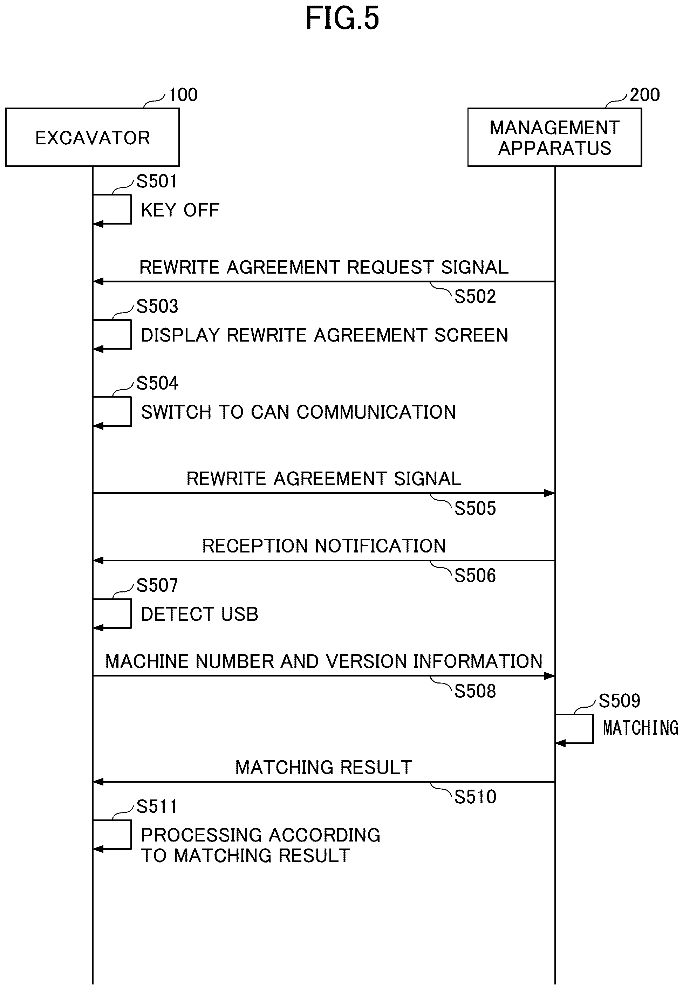

Next, the operation of the management system SYS of the present embodiment will be described with reference to FIG. 5. FIG. 5 is a sequence diagram for explaining the operation of the management system of the excavator.

In the management system SYS of the present embodiment, the excavator 100 is in a state in which the door of the cabin 10 is closed and the limit switch is turned off (step S501).

In the excavator 100, because the limit switch is in an off state, hydraulic oil is not supplied to various hydraulic devices including the hydraulic control valve. Therefore, the excavator 100 is in an inoperative state. Here, the state in which the limit switch is turned off is a state in which the program can be rewritten. The state in which the program can be rewritten is a predetermined time after the key is turned off. The state in which the program can be rewritten is a state in which the key is turned off, power is supplied to the processing device 48 of the display device 40, and power is not supplied to the controller 30. Therefore, in the state in which the program can be rewritten, a predetermined screen can be displayed on the display device 40.

In this state, for example, the worker in the excavator 100 communicates to the service person that the program of the excavator 100 is to be rewritten by a call or the like with the service person who operates the management apparatus 200.

In response to the communication from the worker, the service person transmits a program rewrite agreement request signal from the management apparatus 200 to the excavator 100 (step S502). The rewrite agreement request signal is a signal for requesting notification that the worker of the excavator 100 has agreed to rewriting the program.

When the excavator 100 receives the rewrite agreement request signal, the display control part 31 causes the display device 40 to display a rewrite agreement screen (step S503). Subsequently, the excavator 100 receives an operation to switch the communication method, and the communication switching part 32 switches the communication method between the display device 40 and the controller 30 to CAN communication (step S504).

When the excavator 100 receives an operation on the rewrite agreement screen indicating that the worker of the excavator 100 has agreed to rewriting the program, the information output part 33 transmits a rewrite agreement signal to the management apparatus 200 (step S505). Then, the excavator 100 supplies power to the controller 30.

Upon receiving the rewrite agreement signal from the excavator 100, the management apparatus 200 notifies the excavator 100 that the rewrite agreement signal has been received (step S506).

Next, the excavator 100 detects by the USB detecting part 34 that the USB memory has been inserted into the insertion port 46 by the operator (step S507).

Subsequently, upon detecting the USB memory, the excavator 100 acquires the version information of the program stored in the USB memory and the machine number of the excavator 100, and transmits the machine number and the version information to the management apparatus 200 by the information output part 33 (step S508).

Upon receiving the input of the machine number and the version information by the input receiving part 210, the management apparatus 200 performs a matching processing by the matching processing part 250 (step S509).

Specifically, the matching processing part 250 refers to the management information 241 held by the information managing part 240, and determines whether the version information associated with the machine number received from the excavator 100 in step S508 in the management information 241 matches the version information received from the excavator 100 in step S508. That is, the matching processing part 250 determines whether the management information 241 includes a combination that matches the combination of the machine number and the version information received in step S508.

When the management information 241 includes a combination that matches the combination of the machine number and the version information received in step S508, the matching processing part 250 of the present embodiment sets the result of the matching processing to "matching". When the management information 241 does not include a combination that matches the combination of the machine number and the version information received in step S508, the matching processing part 250 sets the result of the matching processing to "error".

When the matching processing by the matching processing part 250 is ended, the management apparatus 200 transmits the result of the matching processing to the excavator 100 (step S510).

When the excavator 100 receives the result of the matching processing, the excavator 100 executes the processing corresponding to the result of the matching processing (step S511).

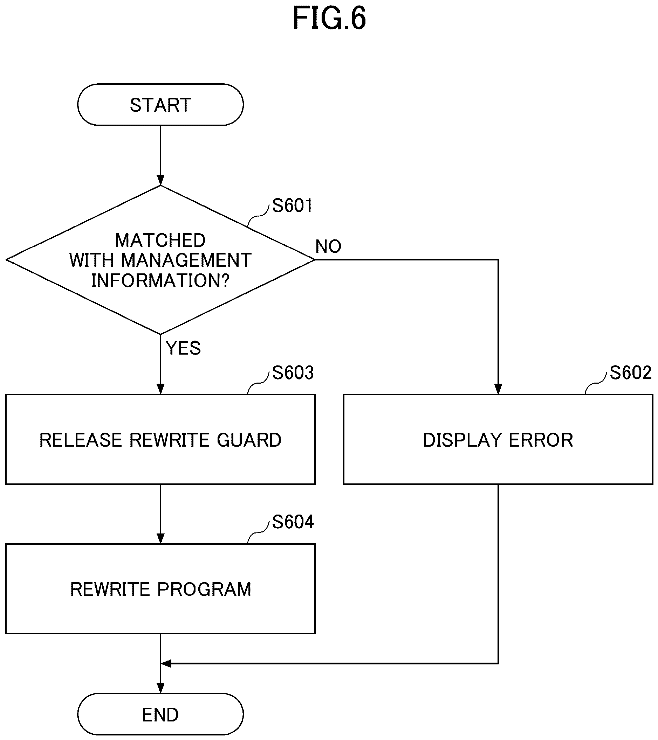

The processing of the excavator 100 after receiving the result of the matching processing will be described below with reference to FIG. 6. FIG. 6 is a flowchart for explaining the excavator processing. FIG. 6 illustrates the details of the processing in step S511 of FIG. 5.

The processing device 48 of the excavator 100 of the present embodiment determines whether the number and version information transmitted to the management apparatus 200 in step S508 match the management information 241 based on the result of the matching processing received from the management apparatus 200 (step S601).

If the result of the matching processing is an error in step S601, the excavator 100 causes the display control part 31 to display an error screen on the image display part 41 of the display apparatus 40 (step S602), and the processing ends.

If the result of the matching processing is "matching" in step S601, the excavator 100 releases the rewrite guard by the rewrite control part 35 in the processing device 48 (step S603).

More specifically, because the result of the matching processing received by the display apparatus 40 is "matching", the rewrite control part 35 transmits to the controller 30 a signal (rewrite guard release signal) indicating that writing of the program for writing to the memory 30A is permitted.

Subsequently, the rewrite control part 35 rewrites the program (step S604).

Specifically, the rewrite control part 35 deletes the program to be rewritten stored in the memory 30A of the controller 30.

In the present embodiment, because the program to be rewritten is deleted before the program for writing is written, the program can be rewritten without increasing the capacity of the memory 30A.

Next, the rewrite control part 35 reads the program for writing from the USB memory, transmits the program to the controller 30 by CAN communication, and stores the program in the memory 30A of the controller 30. When the program rewriting process is ended, the excavator 100 cuts off the supply of power to the controller 30. The completion of the program rewriting process indicates that the process of storing the program read from the USB memory in the memory 30A is completed.

After reading the program for writing from the USB memory, the rewrite control part 35 of the present embodiment deletes the program from the USB memory.

In the present embodiment, information leakage can be prevented by deleting the program in the USB memory.

In the present embodiment, the program rewriting is described as deleting all the programs to be rewritten and rewriting the programs into new programs, but the present embodiment is not limited to this. The program rewriting may be, for example, a process of overwriting a part of the program stored in the memory 30A.

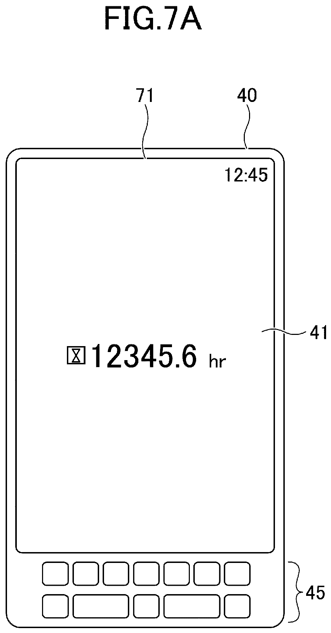

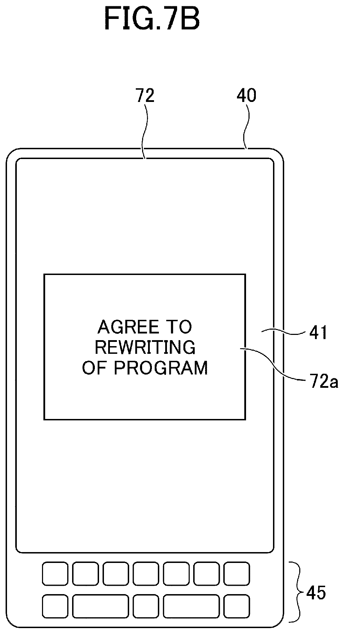

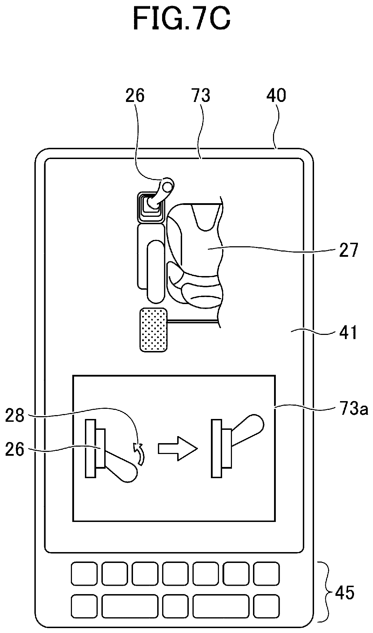

Next, the screen transition of the display device 40 of the excavator 100 will be described with reference to FIGS. 7 to 9.

FIG. 7A is a first diagram for explaining the screen transition of the excavator display device. The screen 71 illustrated in FIG. 7A is an example of the screen displayed in step S501 of FIG. 5, for example.

The screen 71 is displayed on the image display part 41 of the display device 40. The screen 71 may display, for example, the value of the hour meter of the excavator 100.

When the screen 71 receives the rewrite agreement request signal from the management apparatus 200, the screen shifts to the screen 72 illustrated in FIG. 7B. FIG. 7B is a second diagram for explaining the screen transition of the display device of the excavator.

The screen 72 illustrated in FIG. 7B is an example of the rewrite agreement screen displayed on the display device 40 in step S503 of FIG. 5. The screen 72 may display, for example, a message 72a indicating agreement to rewrite the program.

In the present embodiment, the screen 72 transitions to the screen 73 illustrated in FIG. 7C when the worker of the excavator 100 performs an operation indicating agreement to rewrite the program. FIG. 7C is a third diagram for explaining the screen transition of the display device of the excavator.

The screen 73 illustrated in FIG. 7C is an example of a screen for guiding the switching of the communication method, and may be displayed on the display device 40 in step S504 of FIG. 5.

The screen 73 may display an image or the like indicating the location of the operation member 26 for switching the communication method to the CAN method. Specifically, the operation member 26 may be arranged on the left side of the driver's seat 27.

The screen 73 includes a display area 73a. In the display area 73a, an image for guiding the operation method of the operation member 26 for switching the communication method to the CAN method is displayed. Specifically, in the display area 73a, the operation of lifting the operation member 26 in the direction indicated by the arrow image 28 is performed to switch the communication method to the CAN method.

In the present embodiment, after the communication method is switched to the CAN method, a rewrite agreement signal is transmitted from the excavator 100 to the management apparatus 200. Therefore, according to the present embodiment, it is possible to prevent the rewriting from being started before the switching to the communication method suitable for program rewriting is completed.

In the present embodiment, the program is rewritten after the communication method between the display device 40 and the controller 30 is switched to the communication method for program rewriting. Therefore, according to the present embodiment, the processing device 48 of the display device 40 can appropriately transmit the program read from the USB memory to the controller 30.

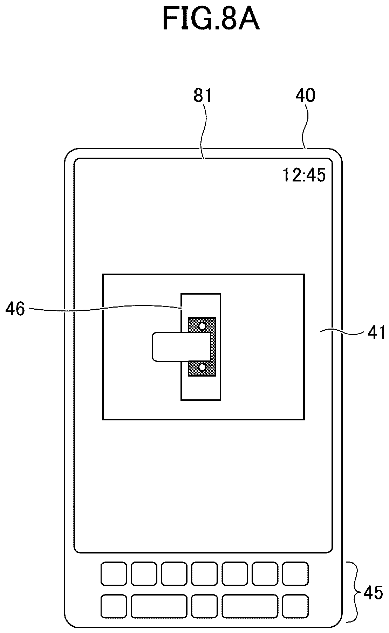

FIG. 8A is a fourth diagram for explaining the screen transition of the display device of the excavator. The screen 81 illustrated in FIG. 8A is an example of a screen for guiding insertion of a USB memory into the insertion port 46, and may be displayed on the display device 40 in step S507 of FIG. 5, for example.

In the excavator 100 of the present embodiment, when a USB memory is inserted into the insertion port 46 of the display device 40, the USB detecting part 34 detects the USB memory, reads the version information of the program from the USB memory, and transmits the version information to the management apparatus 200 together with the machine number of the excavator 100.

The excavator 100 receives the result of the matching processing between the machine number and the version information from the management apparatus 200.

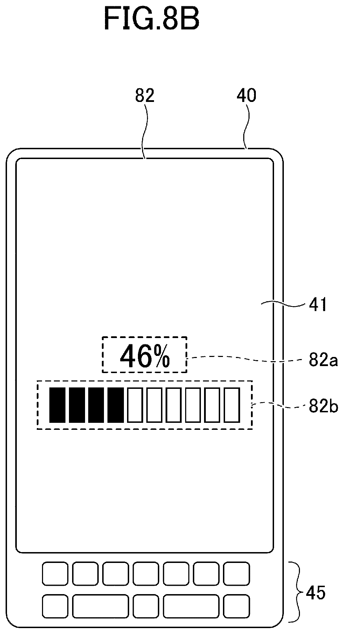

FIG. 8B is a fifth diagram for explaining the screen transition of the display device of the excavator. The screen 82 illustrated in FIG. 8B is an example of the screen displayed on the display device 40 when, for example, the result of the matching processing is "matching" in step S511 of FIG. 5.

In the excavator 100, the process of storing the program read from the USB memory into the memory 30A of the controller 30 while the screen 82 is displayed on the image display part 41 of the display device 40, is executed.

The screen 82 includes display areas 82a and 82b. In the display area 82a, a number indicating the progress rate of the process of storing the program read from the USB memory into the memory 30A of the controller 30, is displayed. In the display area 82b, an image indicating the progress rate is displayed.

The screen 82 illustrates that 46% of the programs stored in the USB memory have been stored in the memory 30A.

As described above, in the present embodiment, when there is an agreement between the worker operating the excavator 100 and the service person on the management apparatus 200 side, and the version information of the program to be newly written in matches the management information 241, the program stored in the memory 30A of the controller 30 is rewritten.

Therefore, according to the present embodiment, it is possible to prevent the occurrence of problems, such as writing erroneous software to the construction machine or writing software to the construction machine that does not require software update. Further, according to the present embodiment, it is possible to prevent, for example, program rewriting by a malicious third party or the like. Thus, according to the present embodiment, program (software) rewriting can be properly performed.

Further, according to the present embodiment described above, it is possible to rewrite the program (software) when the key is off, but the embodiment is not limited thereto. For example, it is possible to rewrite the program (software) in one of the states of when the key is off, the gate lock lever is locked, the engine is off, or the operation lever is in a neutral state, or in a plurality of states.

Although the embodiment of the present invention has been described above, the contents described above do not limit the contents of the invention, and various modifications and improvements are possible within the scope of the present invention.

The present international application is based upon and claims priority to Japanese patent application no. 2022-060815 filed on March 31, 2022, the entire contents of which are incorporated herein by reference.

### REFERENCE SIGNS LIST

1 lower traveling body
2 turning mechanism
3 upper turning body
30 controller
30 a memory
31 display control part
32 communication switching part
33 information output part
34 USB detecting part
35 rewrite control part
40 display device
46 insertion port
48 processing device
100 excavator
200 management apparatus
300 support apparatus

## Claims

1. An excavator comprising:
an upper turning body;
a lower traveling body; and
a control device including a memory in which a program is stored, wherein
rewriting of the program is permitted when a predetermined condition is satisfied.

2. The excavator according to claim 1,
wherein the predetermined condition is that version information of a program for writing that is to be newly written into the memory and a machine number identifying the excavator match management information stored in a management apparatus.

3. The excavator according to claim 1,
wherein the predetermined condition is that version information of a program for writing that is to be newly written into the memory and a machine number identifying the excavator match management information stored in a management apparatus, and a safety condition is satisfied.

4. The excavator according to claim 2 or 3, further comprising:
a detecting part configured to detect a storage medium in which the program for writing is stored; and
an information output part configured to acquire the version information of the program for writing and the machine number identifying the excavator, and output the acquired version information and the machine number to the management apparatus.

5. The excavator according to claim 4, further comprising:
a rewrite control part configured to delete the program from the memory and write the program for writing into the memory when the storage medium is detected and the predetermined condition is satisfied.

6. The excavator according to any one of claims 2 to 5, further comprising:
a driver compartment; and
a display device arranged inside the driver compartment, the display device including a processing device, wherein
the rewriting of the program is performed via the processing device.

7. The excavator according to claim 6, further comprising:
a display control part configured to
receive, from the management apparatus, a request signal requesting agreement to rewrite the program, and display a rewrite agreement screen on the display device, and
transmit a rewrite agreement signal to the management apparatus upon receiving an operation indicating to agree with the rewriting of the program on the rewrite agreement screen.

8. The excavator according to claim 7,
wherein the display control part
displays, on the display device, a guide screen for switching a communication method between the display device and the control device to a predetermined method upon receiving the operation indicating to agree with the rewriting of the program on the rewrite agreement screen, and
transmits the rewrite agreement signal to the management apparatus after the communication method between the display device and the control device is switched to the predetermined method.
